# EUROPEAN PATENT APPLICATION

(11) **EP 4 772 460 A1**
(43) Date of publication of application: **08.07.2026**
(21) Application number: 23955366.2
(22) Date of filing: 29.12.2023
(51) Int. Cl.: B65G 47/90, B25J 15/02

(54) **GRABBING DEVICE, MATERIAL GRABBING ROBOT, BATTERY PRODUCTION LINE, AND MATERIAL-GRABBING CONTROL METHOD**

(30) Priority: 13.10.2023 CN 202311324005
(71) Applicant: Contemporary Amperex Technology Co., Limited, Ningde, Fujian 352100 (CN)
(72) Inventor: WU, Kai, Ningde, Fujian 352100 (CN); GUO, Deyi, Ningde, Fujian 352100 (CN); CHEN, Wentao, Ningde, Fujian 352100 (CN); ZHANG, Chenlong, Ningde, Fujian 352100 (CN)
(74) Representative: Ziebig Hengelhaupt Intellectual Property Attorneys Patentanwaltskanzlei PartGmbB
(86) International application number: PCT/CN2023/143559
(87) International publication number: WO 2025/077029

(57) **Abstract**

This application relates to the field of battery technologies and provides a grabbing apparatus, a material grabbing robot, a battery production line, and a material grabbing control method. The grabbing apparatus includes a mounting frame, a gripper mechanism, and a driving member. The gripper mechanism includes a first position finding member, a second position finding member, a first clamping jaw, a second clamping jaw, and a movable component. The first clamping jaw is arranged on the mounting frame, the second clamping jaw is movably arranged on the movable component, the first position finding member is arranged on the movable component, the second position finding member is arranged on the second clamping jaw, and the second position finding member has a staggered position and a detection position. When the second position finding member is located at one of the staggered position and the detection position, the second clamping jaw and the first clamping jaw clamp a battery cell. When the second position finding member is located at the other of the staggered position and the detection position, the second clamping jaw and the first clamping jaw release the battery cell. The driving member is arranged on the mounting frame and is configured to drive the movable component to move, so that the first clamping jaw and the second clamping jaw clamp or release the battery cell. The grabbing apparatus can grab battery cells of different sizes.

## Description

### CROSS-REFERENCE TO RELATED APPLICATIONS

The present application claims priority to Chinese Patent Application No. 202311324005.5, filed on October 13, 2023, and claims priority to the Chinese Patent Application, which is incorporated herein by reference in its entirety.

### TECHNICAL FIELD

The present application relates to the field of battery technologies, and in particular, to a grabbing apparatus, a material grabbing robot, a battery production line, and a material grabbing control method.

### BACKGROUND

To meet a requirement of high-speed development of the battery industry, in a fully automated manufacturing process of automatic loading of battery cells, a grabbing apparatus configured to grab a battery cell to implement automatic loading of the battery cell plays a key role. In the related technology, when a large package of a battery cell is loaded, there is a problem that it is difficult for one grabbing apparatus to grab battery cells of different sizes.

### SUMMARY

In view of this, embodiments of the present application expect to provide a grabbing apparatus, a material grabbing robot, a battery production line, and a material grabbing control method, which can grab battery cells of different sizes.

To achieve the foregoing objective, the technical solutions in the embodiments of the present application are implemented as follows:
According to an aspect of the embodiments of the present application, a grabbing apparatus is provided, including:
a mounting frame;
a gripper mechanism, including a first position finding member, a second position finding member, a first clamping jaw, a second clamping jaw, and a movable component, where the first clamping jaw is arranged on the mounting frame, the second clamping jaw is movably arranged on the movable component in a first direction, the first position finding member is arranged on the movable component, the second position finding member is arranged on the second clamping jaw, and the second position finding member has a staggered position staggered from the first position finding member and a detection position at which an in-place signal is generated with the first position finding member;
when the second position finding member is located at one of the staggered position and the detection position, the second clamping jaw and the first clamping jaw jointly clamp a battery cell; and when the second position finding member is located at the other of the staggered position and the detection position, the second clamping jaw and the first clamping jaw jointly release the battery cell; and
a driving member, arranged on the mounting frame, where the driving member is configured to drive the movable component to move in the first direction, so that the first clamping jaw and the second clamping jaw jointly clamp or release the battery cell.

In the technical solution, on one hand, the mounting frame may provide a mounting support point for the gripper mechanism and a driving mechanism. The driving member drives the movable component to move in the first direction, and drives the first clamping jaw and/or the second clamping plate to move. In this way, the second clamping jaw cooperates with the first clamping jaw to grab battery cells of different sizes in the first direction, to complete clamping and releasing of the battery cells, so that the battery cells of different sizes are extremely compatible, and adaptability and universality are strong.

In an embodiment, the movable component includes a connection member and an elastic member, the first position finding member is arranged on the connection member, the second position finding member is arranged on the second clamping jaw, the driving member is connected to the connection member, and the driving member and the elastic member jointly work to switch the second position finding member between the staggered position and the detection position.

In the technical solution, the driving member drives the movable component to move in the first direction, and then cooperates with the elastic member to switch the second position finding member between the staggered position and the detection position. In other words, the driving member drives the second clamping jaw to move a first stroke in the first direction, and then the elastic member drives the second clamping jaw to move a second stroke in the first direction. In this way, the second clamping jaw is extremely adjusted to cooperate with the first clamping jaw to grab battery cells of different sizes in the first direction, to complete clamping and releasing of the battery cells, so that the battery cells of different sizes are extremely compatible, and adaptability and universality are strong. In addition, the first position finding member is arranged on the connection member, the second position finding member is arranged on the second clamping jaw, and the second position finding member has the staggered position staggered from the first position finding member and the detection position at which the in-place signal is generated with the first position finding member. In this way, when the second position finding member is located at one of the staggered position and the detection position, the second clamping jaw may cooperate with the first clamping jaw to jointly clamp the battery cell, and when the second position finding member is located at the other of the staggered position and the detection position, the second clamping jaw may cooperate with the first clamping jaw to jointly release the battery cell, to complete loading of the battery cell, with good safety and a high automation degree.

In an embodiment, the elastic member is located on a side of the second clamping jaw away from the first clamping jaw in the first direction, and the elastic member is compressed and deformed to cause the second position finding member to be maintained at one of the staggered position and the detection position.

In the technical solution, the elastic member may be compressed by a same deformation amount for battery cells of different sizes, to provide a same clamping force. This means that same clamping quality and safety can be obtained regardless of a size of a battery cell, to reduce damage or unsafety of the battery cell caused by insufficient clamping or excessively tightly clamping. In addition, an operator does not need to frequently adjust a clamping force of the second clamping jaw. This helps simplify an operation process, improves operation efficiency, and reduces a possibility that an error occurs. In addition, costs of manufacturing and maintaining different gripper mechanisms can be reduced.

In an embodiment, a guide column is formed on a side surface of the second clamping jaw away from the first clamping jaw in the first direction, and the elastic member is sleeved outside the guide column.

In the technical solution, the guide column is formed on the side surface of the second clamping jaw away from the first clamping jaw in the first direction, the elastic member may be sleeved on a periphery of the guide column, and the elastic member may be compressed and extended in a guide direction of the guide column, to ensure that an elastic force provided by the elastic member can directionally push the second clamping jaw to clamp the battery cell.

In an embodiment, the connection member includes:
an upper end plate, where the upper end plate is located above the second clamping jaw, and the first position finding member is arranged on the upper end plate; and
an abutting plate, where the abutting plate is bent downward from the upper end plate, the abutting plate is located on the side of the second clamping jaw away from the first clamping jaw in the first direction, the elastic member is located between the side surface of the second clamping jaw away from the first clamping jaw in the first direction and the abutting plate, and the abutting plate is formed with an avoidance hole for the guide column to pass through.

In the technical solution, the elastic member is arranged between the side surface of the second clamping jaw away from the first clamping jaw in the first direction and the abutting plate. When the driving member pushes the movable component to move forward, the second clamping jaw first comes into contact with the battery cell. The movable component continues to move. In this case, the second clamping jaw cannot continue to move forward due to blocking by the battery cell. The connection member and the second clamping jaw are movably arranged. Therefore, the connection member may continue to move forward, to compress the elastic member located between the side surface of the second clamping jaw away from the first clamping jaw in the first direction and the abutting plate. The elastic member is compressed to store elastic potential energy. The guide column may be avoided through the avoidance hole. When the second position finding member is maintained at one of the staggered position and the detection position, the driving member stops moving. In this case, the elastic member restores deformation in the first direction. Due to resistance of the rear abutting plate, the elastic potential energy stored by the elastic member is converted into kinetic energy to provide a forward acting force to the second clamping jaw. In this way, the battery cell can be flexibly clamped between the first clamping jaw and the second clamping jaw under the action of the elastic member.

In an embodiment, a first sliding groove is formed on one of the connection member and the second clamping jaw, a first sliding rail is formed on the other of the connection member and the second clamping jaw, and the first sliding rail is slidably arranged in the first sliding groove in the first direction.

In the technical solution, when the driving member pushes the movable component to move in the first direction, the second clamping jaw and the connection member may move in the first direction through sliding fit between the first sliding rail and the first sliding groove. The first sliding groove may provide a stable and accurate moving path, and the first sliding rail may easily slide in the first sliding groove, so that an entire moving process is more accurate and controllable. In addition, the first sliding groove may provide additional support and stability, to avoid shake or unstable sliding of the first sliding rail in a moving process. In addition, the first sliding rail and the first sliding groove are combined for use, so that an operator can directly control a moving direction and a moving speed of the first sliding rail or the first sliding groove, to quickly and accurately move to the staggered position and the detection position.

In an embodiment, the driving member is an air cylinder, the air cylinder includes a cylinder barrel and a piston rod, one of the cylinder barrel and the piston rod is connected to the connection member, and the other of the cylinder barrel and the piston rod is connected to the mounting frame.

In the technical solution, the air cylinder is used as the driving member, so that the air cylinder can achieve a relatively fast working speed and response time. In addition, the air cylinder is moved by controlling a pressure and a flow of an air source. In this way, a moving speed and a thrust force of the piston rod may be controlled by adjusting the pressure of the air source in the cylinder barrel, to accurately control the movable component in a moving process. In addition, the air cylinder has a relatively simple structure, which is easy to mount and maintain, and has relatively low costs.

In an embodiment, the air cylinder and the gripper mechanism are arranged in a second direction, and the second direction and the first direction are perpendicular to each other.

In the technical solution, the air cylinder and the gripper mechanism are arranged in the second direction, so that the gripper mechanism can be avoided, and a size of the grabbing apparatus in the first direction can be further reduced, thereby achieving high space utilization.

In an embodiment, the cylinder barrel is located on a side of the connection member close to the first clamping jaw in the first direction, and the piston rod is connected to the connection member.

In the technical solution, when the piston rod is retracted, the connection member may be pulled and the second clamping jaw is driven to move in a direction close to the first clamping jaw. When the piston rod extends, the connection member may be pushed to drive the second clamping jaw to move in a direction away from the first clamping jaw, so that the battery cell can be grabbed and released, and a size of the gripper mechanism in the first direction can be further reduced, to achieve a compact structure.

In an embodiment, one of the first position finding member and the second position finding member is a photoelectric sensor, a detection slot is formed on the photoelectric sensor, the other of the first position finding member and the second position finding member is a detection sheet, and in a state in which the second position finding member is located at the detection position, the detection sheet is located in the detection slot.

In the technical solution, an example in which the second position finding member is located at the detection position, and the second clamping jaw and the first clamping jaw jointly clamp the battery cell is used. When the second clamping jaw drives the detection sheet to move into the detection slot in the first direction, the photoelectric sensor generates an in-place signal, and an operator is prompted that the battery cell has been clamped by the second clamping jaw and the first clamping jaw, and a subsequent operation such as moving the battery cell to perform a material placing operation may be performed. In this way, clamping detection of the battery cell may be implemented, to avoid a case that the battery cell is not clamped and falls.

In an embodiment, there are a plurality of gripper mechanisms and a plurality of driving members, the plurality of gripper mechanisms are arranged at intervals in a second direction, and a connection member of each gripper mechanism is connected to one driving member.

In the technical solution, a plurality of battery cells having different sizes in the first direction may be simultaneously grabbed, with high efficiency.

In an embodiment, the connection member is movably arranged on the mounting frame in the first direction.

In the technical solution, the mounting frame may provide a bearing capability to the connection member. In this way, the driving member may push the connection member to drive the second clamping jaw to move in the first direction, to grab battery cells of different sizes in the first direction.

In an embodiment, a second sliding groove is formed on one of the connection member and the mounting frame, a second sliding rail is formed on the other of the connection member and the mounting frame, and the second sliding rail is slidably arranged in the second sliding groove in the first direction.

In the technical solution, when the piston rod is retracted and extended, the connection member and the mounting frame may move in the first direction through sliding fit between the second sliding rail and the second sliding groove. The second sliding groove may provide a stable and accurate moving path, and the second sliding rail may easily slide in the second sliding groove, so that an entire moving process is more accurate and controllable. In addition, the second sliding groove may provide additional support and stability, to avoid shake or unstable sliding of the second sliding rail in a moving process. In addition, the second sliding rail and the second sliding groove are combined for use, so that an operator can directly control a moving direction and a moving speed of the second sliding rail or the second sliding groove, to quickly and accurately move to a preset position.

According to another aspect of the embodiments of the present application, a material grabbing robot is disclosed, including a robot body and the grabbing apparatus according to any one of the foregoing embodiments, where the robot body is configured to drive the grabbing apparatus to rotate and/or move.

According to still another aspect of the embodiments of the present application, a battery production line is provided, including the material grabbing robot according to the foregoing embodiment.

In an embodiment, an incoming material station, a material loading station, and a material unloading station are arranged on the battery production line, and the material grabbing robot is arranged at the material loading station and is configured to grab the battery cell on the incoming material station and place the battery cell at the material unloading station.

According to yet another aspect of the embodiments of the present application, a material grabbing control method is provided, applied to a control device, where a battery cell is grabbed by using the grabbing apparatus according to any one of the foregoing embodiments. The method includes: sending a grabbing in-place signal to a material grabbing robot, where the grabbing in-place signal is used for controlling the material grabbing robot to drive the grabbing apparatus to move to a material grabbing point; controlling, in response to the material grabbing robot being in place, a driving member of a gripper mechanism on the grabbing apparatus to perform a first action to grab the battery cell; and controlling, in response to an in-place signal sent by a photoelectric sensor on the gripper mechanism, the driving member to stop the first action, to complete grabbing of the battery cell.

In an embodiment, the method further includes: in response to the material grabbing robot being in standby at an original position, determining a current status of the gripper mechanism; and sending the grabbing in-place signal to the material grabbing robot when there is no piece in the gripper mechanism and it is determined that taking is allowed on the material grabbing point.

In an embodiment, the method further includes: sending a material placing signal to the material grabbing robot when there is a piece in the gripper mechanism and it is determined that material placing is allowed on a material placing point, to control the material grabbing robot to move to the material placing point; and after determining that the material grabbing robot reaches the material placing point, controlling the driving member of the gripper mechanism to perform a second action, to complete material placing of the battery cell.

In an embodiment, the method further includes: determining a grabbing distance of the gripper mechanism based on a model of a to-be-grabbed product in response to a first material grabbing signal; and controlling, based on the grabbing distance, the driving member to perform the first action or the second action, to adjust a distance between the fixing member and a movable component.

### BRIEF DESCRIPTION OF THE DRAWINGS

FIG. 1 is a schematic structural diagram of a vehicle according to an embodiment of the present application;
FIG. 2 is a schematic structural diagram of a grabbing apparatus according to another embodiment of the present application, where a second position finding member is located at a detection position, and a second clamping jaw cooperates with a first clamping jaw to clamp a battery cell;
FIG. 3 is a schematic enlarged view of a position A in FIG. 2;
FIG. 4 is a schematic structural diagram of a gripper mechanism and a driving member according to still another embodiment of the present application;
FIG. 5 is a schematic flowchart of a material grabbing control method according to an embodiment of the present application;
FIG. 6 is a schematic flowchart of a material grabbing control method according to another embodiment of the present application; and
FIG. 7 is a schematic flowchart of a material grabbing control method according to still another embodiment of the present application.

### DETAILED DESCRIPTION

Embodiments of the technical solution of the present application will be described in detail with reference to the accompanying drawings. The following embodiments are only intended to more clearly illustrate the technical solutions of the present application and are therefore intended as examples only and are not intended to limit the scope of protection of the present application.

Unless otherwise defined, all technical terms and scientific terms used herein have the same meaning as commonly understood by those skilled in the technical field of the present application. Terms used in this specification are merely intended to describe objectives of specific embodiments, but are not intended to limit the present application. The terms "including" and "having" and any variations thereof in the specification of the present application as well as the above description of the drawings are intended to cover non-exclusive inclusions.

In descriptions of the embodiments of the present application, the technical terms "first", "second", "third", and the like are used only to distinguish different objects and are not understood to indicate or imply relative importance or to imply the number, specific order or primary and secondary relationship of the indicated technical features.

"Embodiment" mentioned in the specification means that particular features, structures, or characteristics described with reference to the embodiment may be included in at least one embodiment of this application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments.

The present application is described below in detail.

A grabbing apparatus 1 provided in an embodiment of the present application is configured to grab a battery cell 2. To make the grabbing apparatus 1 in the present application clearer, before the grabbing apparatus 1 in the present application is described, the battery cell 2 in the present application is first described.

Batters are more widely used in life and industry. The batteries are not only used in energy storage power systems such as water power stations, thermal power stations, wind power stations, and solar power stations, but also widely used in a plurality of fields such as electric bicycles, electric motorcycles, electric vehicles, and aerospace.

The battery provided in the embodiments of the present application may be used in, but is not limited to, a power consuming apparatus such as an energy storage power supply system, a vehicle, a ship, or an aircraft.

A plurality of batteries provided in the embodiments of the present application may be further grouped as a battery module for use. The battery module may also be used in, but is not limited to, a power consuming apparatus such as an energy storage power supply system, a vehicle, a ship, or an aircraft. Use of the battery module can provide higher total energy. In addition, the battery module is formed by arranging a plurality of grouped batteries in a sealed case. Therefore, the battery module has more reliable dust-proof and waterproof performance and can be used in a scenario in which a use environment is more severe, humid, or even submerged in water.

An embodiment of the present application provides a power consuming apparatus including the foregoing battery or battery module configured to provide electric energy. The power consuming apparatus may be, but is not limited to, a mobile phone, a tablet, a notebook computer, an electric toy, an electric tool, an electric scooter, an electric vehicle, a ship, a spacecraft, or the like. The electric toy may include a fixed or mobile electric toy, such as a game console, an electric vehicle toy, an electric ship toy, and an electric airplane toy. The spacecraft may include an airplane, a rocket, a space shuttle, a spaceship, or the like.

For ease of description, the following embodiments are described by using an example in which the power consuming apparatus according to this embodiment of the present application is a vehicle 1000. Descriptions are provided below with reference to the accompanying drawings.

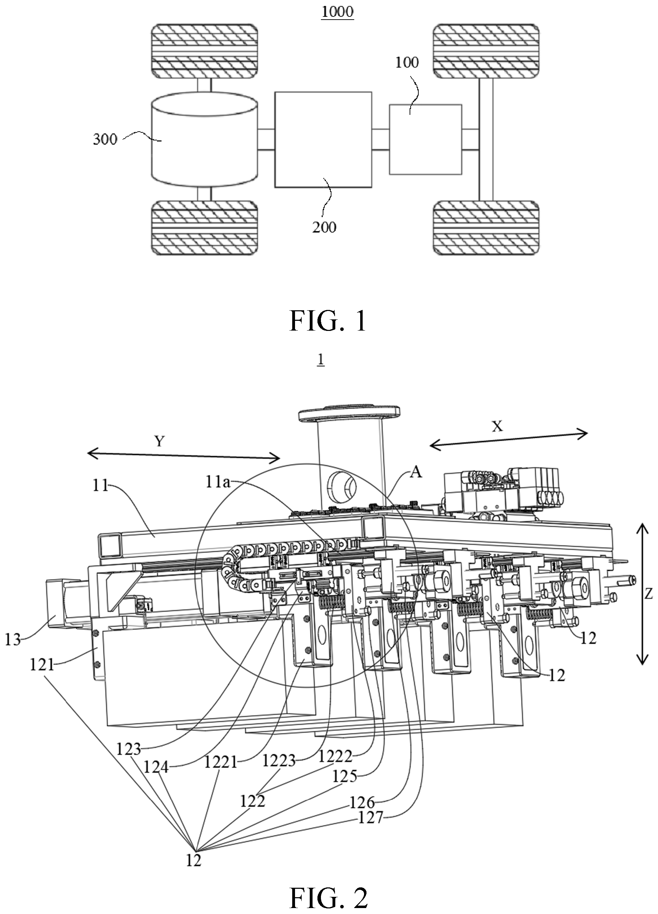

FIG. 1 is a schematic structural diagram of a vehicle 1000 according to some embodiments of the present application. The vehicle 1000 may be a fuel vehicle, a gas vehicle or a new energy vehicle, and the new energy vehicle may be a pure electric vehicle, a hybrid vehicle, an extended-range electric vehicle, or the like. As shown in FIG. 1, a battery 100 is arranged inside the vehicle 1000, and the battery 100 may be arranged at the bottom, the front, or the tail of the vehicle 1000. The battery 100 may be configured to supply power to the vehicle 1000. For example, the battery 100 may be used as an operating power supply of the vehicle 1000. The vehicle 1000 may further include a controller 200 and a motor 300. The controller 200 is configured to control the battery 100 to supply power to the motor 300, for example, to satisfy the working power requirements during the starting, navigation, and traveling of the vehicle 1000.

In some embodiments of the present application, the battery 100 can not only serve as an operating power supply for the vehicle 1000, but also serve as a driving power supply for the vehicle 1000, in place of or partially in place of fuel or natural gas, to provide driving power for the vehicle 1000.

A battery module includes at least one battery cell 2. The battery cell 2 is an energy storage component of the battery 100. The battery module includes a battery monitoring and management apparatus, configured to monitor a battery level and the like of the battery cell 2. The battery modules are packed to form a battery pack.

In the battery 100, there may be a plurality of battery cells 2, and the plurality of battery cells 2 may be connected to each other in series, in parallel, or in a parallel-series manner. The parallel-series manner indicates that the plurality of battery cells 2 are connected in both series and parallel. The plurality of battery cells 2 may be directly connected in series or in parallel or in parallel-series. Certainly, the battery 100 may be in a battery module form in which the plurality of battery cells 2 may alternatively be first connected in series, in parallel, or in parallel-series, then a plurality of battery modules are connected in series, in parallel, or in parallel-series, to form as an entirety.

The battery 100 may further include other structures. For example, the battery 100 may further include a bus component, configured to implement an electrical connection between the plurality of battery cells 2.

In this embodiment of the present application, the battery cell 2 may be a secondary battery. The secondary battery is a battery cell 2 that can be used continually by activating an active material in a charging manner, after the battery cell 2 is discharged.

The battery cell 2 may be a lithium-ion battery, a sodium-ion battery, a lithium-sulfur battery, a sodium-lithium-ion battery, a lithium metal battery, a sodium metal battery, a lithium-sulfur battery, a magnesium ion battery, a nickel-hydrogen battery, a nickel-cadmium battery, a lead-acid battery, or the like. This is not limited in this embodiment of the present application.

The battery cell 2 may be a cylindrical battery cell 2, a prismatic-shaped battery cell 2, or a battery cell 2 in another shape. The prismatic-shaped battery cell 2 includes a square-case battery cell 2 or a polygon prismatic-shaped battery cell 2. The polygon prismatic-shaped battery cell 2 is, for example, a hexagonal prismatic-shaped battery cell 2. This is not specifically limited in the present application.

For example, the battery cell 2 includes a top cover, a housing, an electrode assembly, an electrolyte, and an insulating film. The top cover and the housing are configured to encapsulate components such as the electrode assembly and the electrolyte. A top side of the housing has a communication port, the electrode assembly and the electrolyte are placed inside the housing, and the top cover covers the communication port of the housing. The insulating film covers an outer surface of the housing. The insulating film serves an insulation function, and can further protect a surface of the housing from being scratched.

The electrode assembly includes a positive electrode, a negative electrode, and a separator. During charging and discharging of the battery cell 2, active ions (for example, lithium ions) are intercalated and deintercalated back and forth between the positive electrode and the negative electrode. The separator is arranged between the positive electrode and the negative electrode, and mainly functions to prevent a short circuit between the positive electrode and the negative electrode while allowing the active ions to pass through.

In some embodiments, the electrode assembly is provided with a tab, and the tab can export a current from the electrode assembly. The tab includes a positive tab and a negative tab.

In some embodiments, at least one electrode terminal is arranged on the housing or the top cover, and the electrode terminal is electrically connected to the tab. The electrode terminal may be directly connected to the tab, or may be indirectly connected to the tab through an adapter component. The electrode terminal may be arranged on the top cover or may be arranged on the housing.

Battery cells 2 of different sizes mean that external sizes of the battery cells 2 are different. For example, that the external sizes of the battery cells 2 are different may mean that three-dimensional sizes of the battery cells 2 are different.

When large packages of battery cells are loaded, a same production line needs to be compatible with different types of product designs, and sizes of battery cells also vary greatly. When facing incoming of battery cells of different sizes, a second clamping jaw of a grabbing apparatus in the related technology cannot adapt quickly.

In view of this, the embodiments of the present application provide a grabbing apparatus 1. Referring to FIG. 2 to FIG. 4, the grabbing apparatus 1 includes a mounting frame 11, a gripper mechanism 12, and a driving member 13. The gripper mechanism 12 includes a first clamping jaw 121, a second clamping jaw 1221, and a movable component 122. The first clamping jaw 121 is arranged on the mounting frame 11, and the second clamping jaw 1221 is movably arranged on the movable component 122 in a first direction.

The driving member 13 is arranged on the mounting frame 11. The driving member 13 is configured to drive the movable component 122 to move in the first direction, so that the first clamping jaw 121 and the second clamping jaw 1221 jointly clamp or release the battery cell 2.

In the grabbing apparatus 1 provided in the embodiments of the present application, the mounting frame 11 may provide a mounting support point for the gripper mechanism 12 and a driving mechanism. The driving member 13 drives the movable component 122 to move in the first direction, and drives the first clamping jaw 121 and/or the second clamping plate 1221 to move. In this way, the second clamping jaw 1221 cooperates with the first clamping jaw 121 to grab battery cells 2 of different sizes in the first direction, to complete clamping and releasing of the battery cells 2, so that the battery cells 2 of different sizes are extremely compatible, and adaptability and universality are strong.

In an embodiment, the gripper mechanism 12 includes a first position finding member 123 and a second position finding member 124. The movable component 122 includes a connection member 1222 and an elastic member 1223. The first position finding member 123 is arranged on the connection member 1222, the second position finding member 124 is arranged on the second clamping jaw 1221, and the second position finding member 124 has a staggered position staggered from the first position finding member 123 and a detection position at which an in-place signal is generated with the first position finding member 123.

When the second position finding member 124 is located at one of the staggered position and the detection position, the second clamping jaw 1221 and the first clamping jaw 121 jointly clamp a battery cell 2. When the second position finding member 124 is located at the other of the staggered position and the detection position, the second clamping jaw 1221 and the first clamping jaw 121 jointly release the battery cell 2.

The driving member 13 is connected to the connection member 1222, and the driving member 13 and the elastic member 1223 work together to switch the second position finding member 124 between the staggered position and the detection position. For example, the elastic member 1223 may be a spring during implementation.

Herein, the driving member 13 drives the movable component 122 to move in the first direction, and then cooperates with the elastic member 1223 to switch the second position finding member 124 between the staggered position and the detection position. In other words, the driving member 13 drives the second clamping jaw 1221 to move a first stroke in the first direction, and then the elastic member 1223 drives the second clamping jaw 1221 to move a second stroke in the first direction. In this way, the second clamping jaw 1221 is extremely adjusted to cooperate with the first clamping jaw 121 to grab battery cells 2 of different sizes in the first direction, to complete clamping and releasing of the battery cells 2, so that the battery cells 2 of different sizes are extremely compatible, and adaptability and universality are strong. In addition, the first position finding member 123 is arranged on the connection member 1222, the second position finding member 124 is arranged on the second clamping jaw 1221, and the second position finding member 124 has the staggered position staggered from the first position finding member 123 and the detection position at which the in-place signal is generated with the first position finding member 123. In this way, when the second position finding member 124 is located at one of the staggered position and the detection position, the second clamping jaw 1221 may cooperate with the first clamping jaw 121 to jointly clamp the battery cell 2, and when the second position finding member 124 is located at the other of the staggered position and the detection position, the second clamping jaw 1221 may cooperate with the first clamping jaw 121 to jointly release the battery cell 2, to complete loading of the battery cell 2, with good safety and a high automation degree.

It should be noted that the first direction may be an X direction in FIG. 2, for example, may be a front-rear direction. A second direction may be a Y direction in FIG. 2, for example, may be a left-right direction. A third direction may be a Z direction in FIG. 2, for example, may be an up-down direction.

It should be noted that up refers to a direction toward a ceiling, and down refers to a direction opposite to up.

It should be noted that both the staggered position and the detection position of the second position finding member 124 described herein are positions relative to the first position finding member 123. For example, the first position finding member 123 is fixed, the second position finding member 124 is located below the first position finding member 123 in the second direction, and the second position finding member 124 may move in the first direction. When the second position finding member 124 moves to the front of the first position finding member 123 in the first direction, the second position finding member 124 is at the staggered position. When the second position finding member 124 moves right below the first position finding member 123 in the second direction, the second position finding member 124 is at the detection position.

For example, in an embodiment, a shape of the mounting frame 11 is not limited. For example, the mounting frame 11 may be formed by a plurality of girders, to roughly enclose a rectangular frame, and the gripper mechanism 12 and the driving member 13 may be arranged below the mounting frame 11.

In an embodiment, the elastic member 1223 is located on a side of the second clamping jaw 1221 away from the first clamping jaw 121 in the first direction, and the elastic member 1223 is compressed and deformed to cause the second position finding member 124 to be maintained at one of the staggered position and the detection position.

In this way, the elastic member 1223 may be compressed by a same deformation amount for battery cells 2 of different sizes, to provide a same clamping force. This means that same clamping quality and safety can be obtained regardless of a size of a battery cell 2, to reduce damage or unsafety of the battery cell 2 caused by insufficient clamping or excessively tightly clamping. In addition, an operator does not need to frequently adjust a clamping force of the second clamping jaw 1221. This helps simplify an operation process, improves operation efficiency, and reduces a possibility that an error occurs. In addition, costs of manufacturing and maintaining different gripper mechanisms 12 can be reduced.

In an embodiment, referring to FIG. 2 to FIG. 4, a guide column 1221a is formed on a side surface of the second clamping jaw 1221 away from the first clamping jaw 121 in the first direction, and the elastic member 1223 is sleeved outside the guide column 1221a.

For example, the elastic member 1223 may be a spring. In this way, the guide column 1221a is formed on the side surface of the second clamping jaw 1221 away from the first clamping jaw 121 in the first direction, the elastic member 1223 may be sleeved on a periphery of the guide column 1221a, and the elastic member 1223 may be compressed and extended in a guide direction of the guide column 1221a, to ensure that an elastic force provided by the elastic member 1223 can directionally push the second clamping jaw 1221 to clamp the battery cell 2.

For example, in an embodiment, the guide column 1221a extends in the first direction. In this way, the elastic member 1223 may be compressed in the first direction, to push the second clamping jaw 1221 to cooperate with the first clamping jaw 121 to clamp the battery cell 2.

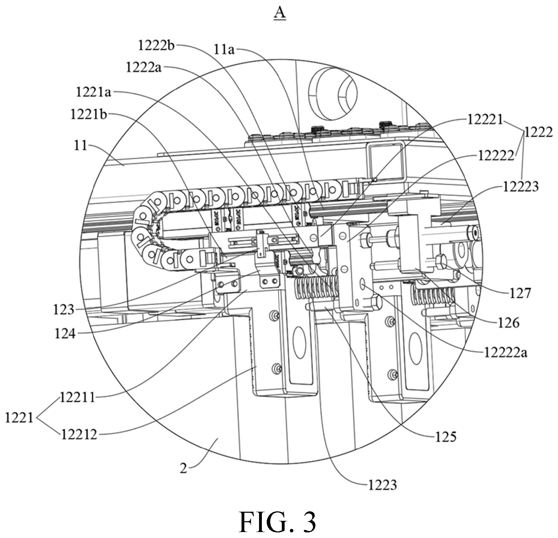

In an embodiment, referring to FIG. 2 and FIG. 3, the connection member 1222 includes an upper end plate 12221 and an abutting plate 12222. The upper end plate 12221 is located above the second clamping jaw 1221, and the first position finding member 123 is arranged on the upper end plate 12221. For example, the first position finding member 123 may be arranged on a side surface of the upper end plate 12221 in the second direction.

The abutting plate 12222 is bent downward from the upper end plate 12221, the abutting plate 12222 is located on the side of the second clamping jaw 1221 away from the first clamping jaw 121 in the first direction, the elastic member 1223 is located between the side surface of the second clamping jaw 1221 away from the first clamping jaw 121 in the first direction and the abutting plate 12222, and the abutting plate 12222 is formed with an avoidance hole 12222a for the guide column 1221a to pass through.

For example, the abutting plate 12222 is bent downward from an upper end surface, so that the connection member 1222 is approximately in an "L" shape.

In this way, the elastic member 1223 is arranged between the side surface of the second clamping jaw 1221 away from the first clamping jaw 121 in the first direction and the abutting plate 12222. When the driving member 13 pushes the movable component 122 to move forward, the second clamping jaw 1221 first comes into contact with the battery cell 2. The movable component 122 continues to move. In this case, the second clamping jaw 1221 cannot continue to move forward due to blocking by the battery cell 2. The connection member 1222 and the second clamping jaw 1221 are movably arranged. Therefore, the connection member 1222 may continue to move forward, to compress the elastic member 1223 located between the side surface of the second clamping jaw 1221 away from the first clamping jaw 121 in the first direction and the abutting plate 12222. The elastic member 1223 is compressed to store elastic potential energy. The guide column 1221a may be avoided through the avoidance hole 12222a. When the second position finding member 124 is maintained at one of the staggered position and the detection position, the driving member 13 stops moving. In this case, the elastic member 1223 restores deformation in the first direction. Due to resistance of the rear abutting plate 12222, the elastic potential energy stored by the elastic member 1223 is converted into kinetic energy to provide a forward acting force to the second clamping jaw 1221. In this way, the battery cell 2 can be flexibly clamped between the first clamping jaw 121 and the second clamping jaw 1221 under the action of the elastic member 1223.

For example, in an embodiment, referring to FIG. 2 and FIG. 3, the second clamping jaw 1221 includes a first plate 12211 and a second plate 12212. The first plate 12211 is movably arranged on a lower surface of the upper end plate 12221 in the first direction. One end of the second plate 12212 is connected to the first plate 12211, and the other end of the second plate 12212 extends downward, so that the second clamping jaw 1221 is approximately in the "L" shape. The elastic member 1223 is arranged between a side surface of the second plate 12212 away from the first clamping jaw 121 in the first direction and the abutting plate 12222. A side surface of the second plate 12212 close to the first clamping jaw 121 in the first direction cooperates with the first clamping jaw 121 to clamp the battery cell 2, and a lower surface of the first plate 12211 is in contact with and abuts against an upper surface of the battery cell 2. In this way, a contact area with the battery cell 2 may be enlarged, so that clamping is more stable.

In an embodiment, referring to FIG. 3, a first sliding groove 1221b is formed on one of the connection member 1222 and the second clamping jaw 1221, a first sliding rail 1222a is formed on the other of the connection member 1222 and the second clamping jaw 1221, and the first sliding rail 1222a is slidably arranged in the first sliding groove 1221b in the first direction.

For example, the first sliding rail 1222a is formed on the lower surface of the upper end plate 12221, the first sliding groove 1221b is formed on an upper surface of the first plate 12211, both the first sliding rail 1222a and the first sliding groove 1221b extend in the first direction, and the first sliding rail 1222a is slidably arranged in the first sliding groove 1221b in the first direction.

In this way, when the driving member 13 pushes the movable component 122 to move in the first direction, the second clamping jaw 1221 and the connection member 1222 may move in the first direction through sliding fit between the first sliding rail 1222a and the first sliding groove 1221b. The first sliding groove 1221b may provide a stable and accurate moving path, and the first sliding rail 1222a may easily slide in the first sliding groove 1221b, so that an entire moving process is more accurate and controllable. In addition, the first sliding groove 1221b may provide additional support and stability, to avoid shake or unstable sliding of the first sliding rail 1222a in a moving process. In addition, the first sliding rail 1222a and the first sliding groove 1221b are combined for use, so that an operator can directly control a moving direction and a moving speed of the first sliding rail 1222a or the first sliding groove 1221b, to quickly and accurately move to the staggered position and the detection position.

For example, in an embodiment, referring to FIG. 3, the gripper mechanism 12 includes a first stopper 125. The first stopper 125 extends in the first direction, and a part of the first stopper 125 extends through the abutting plate 12222 and is located behind the second clamping jaw 1221. In this way, derailment caused by excessive backward movement of the second clamping jaw 1221 can be avoided.

For example, in an embodiment, a flexible layer is arranged on a side surface of the first clamping jaw 121 close to the battery cell 2 in the first direction. In this way, the battery cell 2 can be protected to some extent, thereby reducing clamping damage to the battery cell 2.

For example, in an embodiment, a flexible layer is arranged on a side surface of the second clamping jaw 1221 close to the battery cell 2. For example, the flexible layer is formed on a side surface of the second plate 12212 close to the battery cell 2 in the first direction, and the flexible layer is formed on a side surface of the first plate 12211 close to the battery cell 2 in the third direction. In this way, clamping damage to the battery cell 2 can be reduced.

For example, in an embodiment, the flexible layer is arranged on the side surface of the first clamping jaw 121 close to the battery cell 2 in the first direction, and the flexible layer is arranged on the side surface of the second clamping jaw 1221 close to the battery cell 2. In this way, clamping damage to the battery cell 2 can be further reduced.

For example, in an embodiment, the flexible layer may be polyurethane. The polyurethane has good elasticity and softness, and can effectively absorb and distribute an impact and vibration, to reduce collision or vibration between the battery cell 2 and the first clamping jaw 121 and the second clamping jaw 1221, so as to reduce impact on the grabbing apparatus 1. In addition, the polyurethane may be used as a protective layer, to avoid a case that the battery cell 2 is in direct contact with the first clamping jaw 121 and the second clamping jaw 1221, so as to reduce damage, wear, and scratching of the battery cell 2. In addition, the polyurethane may fill an irregular gap with the battery cell 2 and an uneven surface on the battery cell 2, to provide better adaptability and close connection, so that the battery cell 2 is more stably clamped.

In an embodiment, referring to FIG. 2 to FIG. 4, the driving member 13 is an air cylinder, the air cylinder includes a cylinder barrel 131 and a piston rod 132, one of the cylinder barrel 131 and the piston rod 132 is connected to the connection member 1222, and the other of the cylinder barrel 131 and the piston rod 132 is connected to the mounting frame 11. For example, the air cylinder 131 may be a clamping air cylinder, and may implement clamping or releasing of the battery cell 2. In this way, the air cylinder is used as the driving member 13, so that the air cylinder can achieve a relatively fast working speed and response time. In addition, the air cylinder is moved by controlling a pressure and a flow of an air source. In this way, a moving speed and a thrust force of the piston rod 132 may be controlled by adjusting the pressure of the air source in the cylinder barrel 131, to accurately control the movable component 122 in a moving process. In addition, the air cylinder has a relatively simple structure, which is easy to mount and maintain, and has relatively low costs.

In an embodiment, the air cylinder is a self-locking air cylinder. In this way, when the second position finding member 124 is located at one of the staggered position and the detection position, and the second clamping jaw 1221 and the first clamping jaw 121 jointly clamp the battery cell 2, self-locking may be implemented by closing the air cylinder. In this case, the movable component 122 may be stable at this position, to ensure a stable clamping force for the battery cell 2, and avoid moving or sliding of the movable component 122.

In an embodiment, referring to FIG. 2 to FIG. 4, the air cylinder and the gripper mechanism 12 are arranged in the second direction, and the second direction and the first direction are perpendicular to each other. In this way, the gripper mechanism 12 can be avoided, and a size of the grabbing apparatus 1 in the first direction can be further reduced, thereby achieving high space utilization.

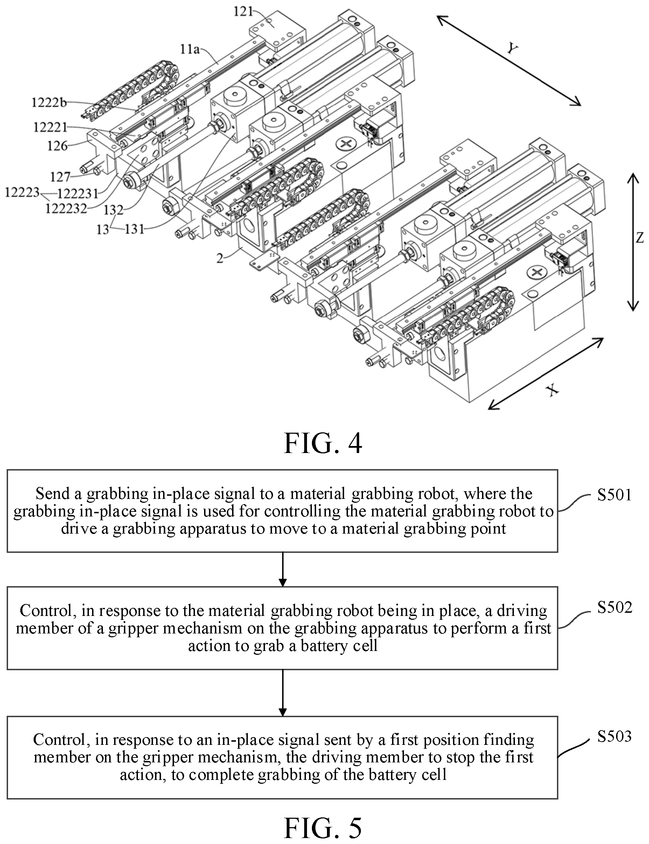

In an embodiment, referring to FIG. 3 and FIG. 4, the cylinder barrel 131 is located on a side of the connection member 1222 close to the first clamping jaw 121 in the first direction, and the piston rod 132 is connected to the connection member 1222.

For example, the connection member 1222 includes a connection plate 12223. The connection plate 12223 is arranged on a side of the mounting frame 11 away from the first clamping jaw 121 in the first direction. The connection plate 12223 is formed by a connection portion 122231 and a fixing portion 122232. The connection portion 122231 is connected to the piston rod 132. One end of the fixing portion 122232 is connected to the connection portion 122231, and the other end of the fixing portion 122232 extends forward and is connected to a side surface of the abutting plate 12222 in the second direction, so that the connection plate 12223 is approximately in an "L" shape. In this way, when the piston rod 132 is retracted, the connection member 1222 may be pulled and the second clamping jaw 1221 is driven to move in a direction close to the first clamping jaw 121. When the piston rod 132 extends, the connection member 1222 may be pushed to drive the second clamping jaw 1221 to move in a direction away from the first clamping jaw 121, so that the battery cell 2 can be grabbed and released, and a size of the gripper mechanism 12 in the first direction can be further reduced, to achieve a compact structure.

In an embodiment, one of the first position finding member 123 and the second position finding member 124 is a photoelectric sensor, a detection slot is formed on the photoelectric sensor, the other of the first position finding member 123 and the second position finding member 124 is a detection sheet, and in a state in which the second position finding member 124 is located at the detection position, the detection sheet is located in the detection slot.

For example, in an embodiment, the first position finding member 123 is the photoelectric sensor, and the second position finding member 124 is the detection sheet. An example in which the second position finding member 124 is located at the detection position, and the second clamping jaw 1221 and the first clamping jaw 121 jointly clamp the battery cell 2 is used. When the second clamping jaw 1221 drives the detection sheet to move into the detection slot in the first direction, the photoelectric sensor generates an in-place signal, so that an operator may be prompted that the battery cell 2 has been clamped by the second clamping jaw 1221 and the first clamping jaw 121, and a subsequent operation such as moving the battery cell 2 to perform a material placing operation may be performed. In this way, clamping detection of the battery cell 2 may be implemented, to avoid a case that the battery cell 2 is not clamped and falls.

It should be noted that the photoelectric sensor may be a photoelectric sensor in the following material grabbing control method.

In an embodiment, referring to FIG. 2 and FIG. 4, there are a plurality of gripper mechanisms 12 and a plurality of driving members 13, the plurality of gripper mechanisms 12 are arranged at intervals in the second direction, and a connection member 1222 of each gripper mechanism 12 is connected to one driving member 13.

For example, a quantity of gripper mechanisms 12 and a quantity of driving members 13 are not limited. For example, there may be four gripper mechanisms 12 and four driving members 13. The four gripper mechanisms 12 are arranged at intervals in the second direction. Two driving members 13 are arranged between a 1^{st} gripper mechanism 12 and a 2^{nd} gripper mechanism 12 from left to right. Two driving members 13 are also arranged between a 3^{rd} gripper mechanism 12 and a 4^{th} gripper mechanism 12. Each driving member 13 is connected to a connection member 1222 of one gripper mechanism 12. In this way, a plurality of battery cells 2 of different sizes in the first direction can be simultaneously grabbed, with high efficiency.

For example, in an embodiment, sides of a plurality of first clamping jaws 121 away from the battery cell 2 are in a same plane. In this way, a grabbing reference plane of the battery cell 2 may be determined, to facilitate the grabbing apparatus 1 to grab a plurality of battery cells 2.

In an embodiment, referring to FIG. 2 and FIG. 3, the connection member 1222 is movably arranged on the mounting frame 11 in the first direction. In other words, the mounting frame 11 may provide a bearing capability to the connection member 1222. In this way, the driving member 13 may push the connection member 1222 to drive the second clamping jaw 1221 to move in the first direction, to grab battery cells 2 of different sizes in the first direction.

In an embodiment, a second sliding groove 1222b is formed on one of the connection member 1222 and the mounting frame 11, a second sliding rail 11a is formed on the other of the connection member 1222 and the mounting frame 11, and the second sliding rail 11a is slidably arranged in the second sliding groove 1222b in the first direction.

For example, the second sliding groove 1222b is formed on an upper surface of the upper end plate 12221, the second sliding rail 11a is formed on a lower surface of the mounting frame 11, both the second sliding rail 11a and the second sliding groove 1222b extend in the first direction, and the second sliding rail 11a is slidably arranged in the second sliding groove 1222b in the first direction.

In this way, when the piston rod 132 is retracted and extended, the connection member 1222 and the mounting frame 11 may move in the first direction through sliding fit between the second sliding rail 11a and the second sliding groove 1222b. The second sliding groove 1222b may provide a stable and accurate moving path, and the second sliding rail 11a may easily slide in the second sliding groove 1222b, so that an entire moving process is more accurate and controllable. In addition, the second sliding groove 1222b may provide additional support and stability, to avoid shake or unstable sliding of the second sliding rail 11a in a moving process. In addition, the second sliding rail 11a and the second sliding groove 1222b are combined for use, so that an operator can directly control a moving direction and a moving speed of the second sliding rail 11a or the second sliding groove 1222b, to quickly and accurately move to a preset position.

For example, in an embodiment, referring to FIG. 2 to FIG. 4, the gripper mechanism 12 includes a stopping block 126 and a second stopper 127. The stopping block 126 is arranged on a side of the mounting frame 11 away from the first clamping jaw 121 in the first direction and is spaced apart from the abutting plate 12222. The second stopper 127 extends in the first direction, and a part of the second stopper 127 passes through the stopping block 126 and is located behind the abutting plate 12222. In this way, derailment caused by excessive backward movement of the connection member 1222 can be avoided.

An embodiment of the present application further provides a material grabbing robot, including a robot body and the grabbing apparatus according to any one of the foregoing embodiments of the present application, where the robot body is configured to drive the grabbing apparatus 1 to rotate and/or move. In this way, when the battery cell 2 is grabbed, the robot body may drive the grabbing apparatus 1 to move above the battery cell 2, and then the driving member 13 drives the movable component 122 to move in the first direction, and drives the second clamping jaw 1221 to move in the first direction, so that the second position finding member 124 is switched between the staggered position and the detection position, to grab and clamp the battery cell 2.

In some embodiments, a mechanical hand of the material grabbing robot may be the foregoing grabbing apparatus.

An embodiment of the present application further provides a battery production line, including the material grabbing robot in the foregoing embodiment. In the battery production line provided in some embodiments of the present application, the battery cell 2 may be placed by using a tray and transported to a subsequent processing position.

In addition, the production line may further include a conveying line. The conveying line may include a conveying line for conveying the tray, and may further include a conveying line for conveying the to-be-grabbed battery cell 2. The conveying line of the to-be-grabbed battery cell 2 may convey the to-be-grabbed battery cell 2 to a vicinity of the material grabbing robot, and the to-be-grabbed battery cell 2 is grabbed by using the robot body or the like and the to-be-grabbed battery cell 2 is placed in the tray.

For example, the conveying line may be a conveying belt, for example, may be a strip-shaped object such as a belt, may be a plurality of rolls arranged in parallel, or may be a plurality of chains.

The battery production line can quickly implement grabbing and placing of the battery cell 2 in an automated manner, with better efficiency. In addition, because the battery cell 2 is placed on the tray, the battery cell 2 may be directly sent to a next processing apparatus by using the tray.

In an embodiment, an incoming material station, a material loading station, and a material unloading station are arranged on the battery production line, and the material grabbing robot is arranged at the material loading station and is configured to grab the battery cell 2 on the incoming material station and place the battery cell 2 at the material unloading station. In this way, battery cells 2 of different sizes at the incoming material station may be grabbed by using the material grabbing robot at the material loading station, and then placed at a material unloading point of the material unloading station for subsequent processing.

Based on the foregoing embodiments, the grabbing apparatus 1 may be further controlled by a control device. For example, the control device may be a PLC (Programmable Logic Controller, that is, programmable logic controller) device. Therefore, an embodiment of this application further provides a material grabbing control method. A battery cell is grabbed by using the grabbing apparatus in any one of the foregoing embodiments, and the method is applied to the control device. As shown in FIG. 5, the method includes the following steps.

Step S501: Send a grabbing in-place signal to a material grabbing robot, where the grabbing in-place signal is used for controlling the material grabbing robot to drive the grabbing apparatus to move to a material grabbing point.

Herein, a mechanical hand of the material grabbing robot is the grabbing apparatus. An example in which a to-be-grabbed product is a battery cell is used, that is, the material grabbing robot is controlled to drive the grabbing apparatus to move to a stacking point of the battery cell.

Step S502: Control, in response to the material grabbing robot being in place, a driving member of a gripper mechanism on the grabbing apparatus to perform a first action to grab the battery cell.

Herein, the battery cell is used as an example, and a subsequent first action of the driving member is opposite to a second action. The driving member may be a servo motor or a clamping air cylinder. When the driving member is the servo motor, the first action may be reverse rotation of the motor, to grab the battery cell. The second action may be forward rotation of the motor, to release the battery cell. When the driving member is the clamping air cylinder, the first action may be that the clamping air cylinder performs clamping or retraction, to grab the battery cell. The second action may be that the clamping air cylinder performs releasing or opening, to release the battery cell.

Step S503: Control, in response to an in-place signal sent by a first position finding member on the gripper mechanism, the driving member to stop the first action, to complete grabbing of the battery cell.

In some embodiments, the method further includes: in response to the material grabbing robot being in standby at an original position, determining a current status of the gripper mechanism; and sending the grabbing in-place signal to the material grabbing robot when there is no piece in the gripper mechanism and it is determined that taking is allowed on the material grabbing point.

Herein, the PLC device further records the current status of the gripper mechanism. The current status of the gripper mechanism may be that there is no piece or there is a piece in the gripper mechanism. The PLC device further learns of a current status of the material grabbing point. For example, the current status of the material grabbing point may be that taking is allowed, or taking is not allowed. When there is no piece in the gripper mechanism and it is determined that taking is not allowed on the material grabbing point, waiting is performed until the current status of the material grabbing point is that taking is allowed, and then the grabbing in-place signal is sent to the material grabbing robot.

In some other embodiments, the method further includes: sending a material placing signal to the material grabbing robot when there is a piece in the gripper mechanism and it is determined that material placing is allowed on a material placing point, to control the material grabbing robot to move to the material placing point; and after determining that the material grabbing robot reaches the material placing point, controlling the driving member of the gripper mechanism to perform a second action, to complete material placing of the battery cell.

Herein, the PLC device further records a current status of the material placing point. For example, the current status of the material placing point may be that material placing is allowed, or material placing is not allowed. When there is a piece in the gripper mechanism and it is determined that material placing is not allowed on the material placing point, waiting is performed until the current status of the material placing point is that material placing is allowed.

In some other embodiments, the method further includes: determining a grabbing distance of the gripper mechanism based on a model of a to-be-grabbed product in response to a first material grabbing signal; and controlling, based on the grabbing distance, the driving member to perform the first action or the second action, to adjust a distance between a first clamping jaw and a movable component.

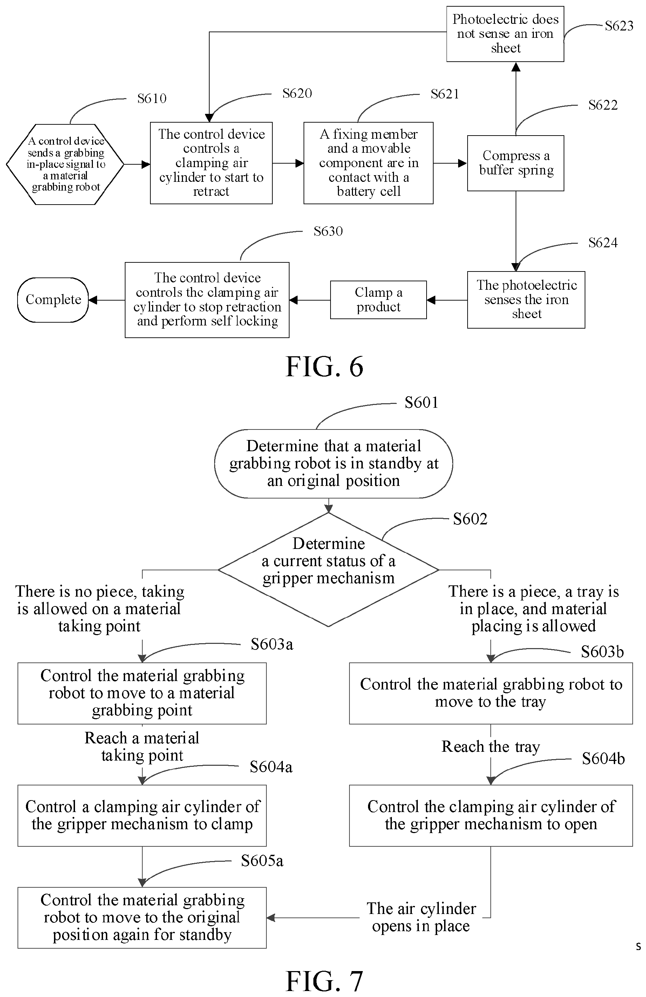

Based on the foregoing embodiment, an embodiment of the present application further provides a material grabbing control method, applied to a control device. As shown in FIG. 6, the method includes the following steps.

Step S610: The control device sends a grabbing in-place signal to a material grabbing robot.

The grabbing in-place signal is used for controlling the material grabbing robot to drive a grabbing apparatus to move to a material grabbing point. In response to the grabbing in-place signal, the material grabbing robot drives the grabbing apparatus to move to the material grabbing point. Material grabbing may be grabbing a cell (a battery cell) by using the grabbing apparatus.

In some embodiments, the control device determines a grabbing distance of a grabbing mechanism based on a model of a to-be-grabbed product (bluebook information of the product). For example, a square battery cell is grabbed, grabbing is generally performed in a length direction of the battery cell, that is, the first direction shown in FIG. 4, so that a length of the battery cell may be determined according to a product model of the battery cell, and then a distance between a fixing member and a movable component on the grabbing structure is controlled based on the length of the battery cell.

Step S620: The control device controls a clamping air cylinder to start to retract.

In some embodiments, the control device may receive a grabbing in-place response signal sent by the material grabbing robot, to determine that the material grabbing robot has completed a material grabbing in-place action. Then, the control device sends a clamping signal to the clamping air cylinder, and the clamping air cylinder starts to retract in response to the clamping signal. In other words, the control device may be electrically connected to the clamping air cylinder.

In some other embodiments, the control device may alternatively send a clamping signal to the material grabbing robot, and the material grabbing robot controls, in response to the clamping signal, the clamping air cylinder to start to retract. In other words, the control device may be electrically connected to the material grabbing robot, and the clamping air cylinder is electrically connected to the material grabbing robot.

Herein, the clamping air cylinder drives the fixing member (which is used as a fixed end stopping block) and the movable component (a movable end stopping block) of the grabbing structure to be in contact with the battery cell (step S621). The movable component includes a connection member and an elastic member (for example, a spring). A buffer spring in the movable component is compressed (step S622), so that a connected detection sheet (for example, a sensing iron sheet) moves to a detection slot of a photoelectric sensor. It can be learned that, the photoelectric sensor is configured to detect whether the grabbing structure clamps the battery cell in place, that is, when clamping is in place, the photoelectric sensor generates an in-place signal (step S624), and sends the in-place signal to the control device or the material grabbing robot. If clamping is not in place, the photoelectric sensor does not generate the in-place signal (step S623), and the control device continues to control the clamping air cylinder to retract.

Step S630: In response to the in-place signal sent by the photoelectric sensor, the control device controls the clamping air cylinder to stop retraction and perform self locking.

In this way, the battery cell product is clamped, and material taking is completed by the grabbing mechanism. In some other embodiments, as an alternative solution of step S630, the material grabbing robot may alternatively control, in response to the in-place signal sent by the photoelectric sensor, the clamping air cylinder to stop retraction and perform self locking.

Based on the foregoing embodiment, an embodiment of the present application may further provide a material grabbing control method, applied to a control device. As shown in FIG. 7, the method includes the following steps.

Step S601: Determine that a material grabbing robot is in standby at an original position.

Step S602: Determine a current status of a gripper mechanism.

Herein, the current status of the grabbing apparatus includes that there is a piece (for example, there is a battery cell) and there is no piece (for example, there is no battery cell). If there is no piece in the grabbing apparatus, the following step S603a to step S605a are performed. If there is a piece in the grabbing apparatus, the following step S603b and step S604b are performed.

Step S603a: If there is no piece in the gripper mechanism, when it is determined that taking is allowed on a transfer station, control the material grabbing robot to move to a material grabbing point.

Step S604a: After determining that the material grabbing robot reaches the material grabbing point, control a clamping air cylinder of the gripper mechanism to perform clamping.

Step S605a: When determining that the clamping air cylinder performs clamping in place, control the material grabbing robot to move to the original position again for standby.

Step S601 is returned after step S605a.

Step S603b: If there is a piece in the grabbing apparatus, when determining that material placing is allowed when a tray is in place, control the material grabbing robot to move to the tray.

Herein, if the grabbed material is a battery cell, the tray may be a cell tray, and at least one battery cell may be placed on each tray. In other words, the tray may be understood as a material placing point.

Step S604b: After the material grabbing robot reaches the tray, control the clamping air cylinder of the gripper mechanism to perform opening.

Step S601 is returned after step S604b.

The foregoing embodiments are merely used for describing the technical solutions of the present application, but are not intended to limit the present application. Although the present application is described in detail with reference to the foregoing embodiments, a person of ordinary skill in the art should understand that, modifications may still be made to the technical solutions in the foregoing embodiments, or equivalent replacements may be made to some or all of the technical features; These modifications or substitutions do not depart the essence of the corresponding technical solution from the scope of the technical solution of each embodiment of the present application, and should be covered in the scope of this specification of the present application. In particular, as long as there is no structural conflict, each technical feature mentioned in each embodiment can be combined in any manner.

## Claims

1. A grabbing apparatus, comprising:
a mounting frame;
a gripper mechanism, comprising a first position finding member, a second position finding member, a first clamping jaw, a second clamping jaw, and a movable component, wherein the first clamping jaw is arranged on the mounting frame, the second clamping jaw is movably arranged on the movable component in a first direction, the first position finding member is arranged on the movable component, the second position finding member is arranged on the second clamping jaw, and the second position finding member has a staggered position staggered from the first position finding member and a detection position at which an in-place signal is generated with the first position finding member;
when the second position finding member is located at one of the staggered position and the detection position, the second clamping jaw and the first clamping jaw jointly clamp a battery cell; and when the second position finding member is located at the other of the staggered position and the detection position, the second clamping jaw and the first clamping jaw jointly release the battery cell; and
a driving member, arranged on the mounting frame, wherein the driving member is configured to drive the movable component to move in the first direction, so that the first clamping jaw and the second clamping jaw jointly clamp or release the battery cell.

2. The grabbing apparatus according to claim 1, wherein the movable component comprises a connection member and an elastic member, the first position finding member is arranged on the connection member, the driving member is connected to the connection member, and the driving member and the elastic member jointly work to switch the second position finding member between the staggered position and the detection position.

3. The grabbing apparatus according to claim 2, wherein the elastic member is located on a side of the second clamping jaw away from the first clamping jaw in the first direction, and the elastic member is compressed and deformed to cause the second position finding member to be maintained at one of the staggered position and the detection position.

4. The grabbing apparatus according to claim 3, wherein a guide column is formed on a side surface of the second clamping jaw away from the first clamping jaw in the first direction, and the elastic member is sleeved outside the guide column.

5. The grabbing apparatus according to claim 4, wherein the connection member comprises:
an upper end plate, wherein the upper end plate is located above the second clamping jaw, and the first position finding member is arranged on the upper end plate; and
an abutting plate, wherein the abutting plate is bent downward from the upper end plate, the abutting plate is located on the side of the second clamping jaw away from the first clamping jaw in the first direction, the elastic member is located between the side surface of the second clamping jaw away from the first clamping jaw in the first direction and the abutting plate, and the abutting plate is formed with an avoidance hole for the guide column to pass through.

6. The grabbing apparatus according to any one of claims 2 to 5, wherein a first sliding groove is formed on one of the connection member and the second clamping jaw, a first sliding rail is formed on the other of the connection member and the second clamping jaw, and the first sliding rail is slidably arranged in the first sliding groove in the first direction.

7. The grabbing apparatus according to any one of claims 2 to 5, wherein the driving member is an air cylinder, the air cylinder comprises a cylinder barrel and a piston rod, one of the cylinder barrel and the piston rod is connected to the connection member, and the other of the cylinder barrel and the piston rod is connected to the mounting frame.

8. The grabbing apparatus according to claim 7, wherein the air cylinder and the gripper mechanism are arranged in a second direction, and the second direction and the first direction are perpendicular to each other.

9. The grabbing apparatus according to claim 8, wherein the cylinder barrel is located on a side of the connection member close to the first clamping jaw in the first direction, and the piston rod is connected to the connection member.

10. The grabbing apparatus according to claim 1, wherein one of the first position finding member and the second position finding member is a photoelectric sensor, a detection slot is formed on the photoelectric sensor, the other of the first position finding member and the second position finding member is a detection sheet, and in a state in which the second position finding member is located at the detection position, the detection sheet is located in the detection slot.

11. The grabbing apparatus according to claim 2, wherein there are a plurality of gripper mechanisms and a plurality of driving members, the plurality of gripper mechanisms are arranged at intervals in a second direction, and a connection member of each gripper mechanism is connected to one driving member.

12. The grabbing apparatus according to any one of claims 2 to 5, wherein the connection member is movably arranged on the mounting frame in the first direction.

13. The grabbing apparatus according to claim 12, wherein a second sliding groove is formed on one of the connection member and the mounting frame, a second sliding rail is formed on the other of the connection member and the mounting frame, and the second sliding rail is slidably arranged in the second sliding groove in the first direction.

14. A material grabbing robot, comprising a robot body and the grabbing apparatus according to any one of claims 1 to 13, wherein the robot body is configured to drive the grabbing apparatus to rotate and/or move.

15. A battery production line, comprising the material grabbing robot according to claim 14.

16. The battery production line according to claim 15, wherein an incoming material station, a material loading station, and a material unloading station are arranged on the battery production line, and the material grabbing robot is arranged at the material loading station and is configured to grab the battery cell on the incoming material station and place the battery cell at the material unloading station.

17. A material grabbing control method, applied to a control device, wherein a battery cell is grabbed by using the grabbing apparatus according to claim 1, and the method comprises:
sending a grabbing in-place signal to a material grabbing robot, wherein the grabbing in-place signal is used for controlling the material grabbing robot to drive the grabbing apparatus to move to a material grabbing point;
controlling, in response to the material grabbing robot being in place, a driving member of a gripper mechanism on the grabbing apparatus to perform a first action to grab the battery cell; and
controlling, in response to an in-place signal sent by a photoelectric sensor on the gripper mechanism, the driving member to stop the first action, to complete grabbing of the battery cell.

18. The method according to claim 17, further comprising:
in response to the material grabbing robot being in standby at an original position, determining a current status of the gripper mechanism; and
sending the grabbing in-place signal to the material grabbing robot when there is no piece in the gripper mechanism and it is determined that taking is allowed on the material grabbing point.

19. The method according to claim 18, further comprising:
sending a material placing signal to the material grabbing robot when there is a piece in the gripper mechanism and it is determined that material placing is allowed on a material placing point, to control the material grabbing robot to move to the material placing point; and
after determining that the material grabbing robot reaches the material placing point, controlling the driving member of the gripper mechanism to perform a second action, to complete material placing of the battery cell.

20. The method according to any one of claims 17 to 19, further comprising:
determining a grabbing distance of the gripper mechanism based on a model of a to-be-grabbed product in response to a first material grabbing signal; and controlling, based on the grabbing distance, the driving member to perform the first action or the second action, to adjust a distance between a first clamping jaw and a movable component.
